# EUROPÄISCHE PATENTSCHRIFT

(11) **EP 3 183 465 B1**
(45) Veröffentlichungstag und Bekanntmachung des Hinweises auf die Patenterteilung: **27.11.2019**
(21) Anmeldenummer: 15738081.7
(22) Anmeldetag: 15.07.2015
(51) Int. Cl.: F16D 41/067, F16D 65/56

(54) **NACHSTELLEINRICHTUNG FÜR EINE SCHEIBENBREMSE UND SCHEIBENBREMSE MIT EINER SOLCHEN NACHSTELLEINRICHTUNG**
ADJUSTING DEVICE FOR A DISC BRAKE, AND DISC BRAKE WITH SUCH AN ADJUSTING DEVICE
DISPOSITIF DE RATTRAPAGE D'UN FREIN À DISQUE ET FREIN À DISQUE ÉQUIPÉ D'UN TEL DISPOSITIF DE RATTRAPAGE

(30) Priorität: 21.08.2014 DE 102014111956
(43) Veröffentlichungstag der Anmeldung: 28.06.2017
(73) Patentinhaber: KNORR-BREMSE Systeme für Nutzfahrzeuge GmbH, 80809 München (DE)
(72) Erfinder: RGUICHI, Abdelaziz, 82140 Olching (DE); WEBER, Ralf, 80992 München (DE); SCHEUFLER, Christian, 80807 München (DE)
(86) Internationale Anmeldenummer: PCT/EP2015/066098
(87) Internationale Veröffentlichungsnummer: WO 2016/026618

(56) Entgegenhaltungen:
- DE-A1- 1 908 137
- DE-U1- 9 318 556
- FR-A1- 2 398 931
- US-A- 5 273 144

## Beschreibung

Die vorliegende Erfindung betrifft eine Nachstelleinrichtung für eine Scheibenbremse für Fahrzeuge, insbesondere für Nutzfahrzeuge nach dem Oberbegriff des Anspruchs 1. Die Erfindung bezieht sich auch auf eine Scheibenbremse mit einer solchen Eine solche Nachstelleinrichtung ist zum Beispiel aus dem Dokument FR 2 398 931 A1 bekannt.

Fahrzeuge und bestimmte technische Geräte verwenden häufig Reibungsbremsen, um kinetische Energie umzuwandeln. Bevorzugt wird dabei speziell im Personenkraftwagen- und im Nutzfahrzeugbereich die Scheibenbremse. Bei der typischen Bauform einer Scheibenbremse besteht diese aus einem Bremssattel samt innerer Mechanik, aus in der Regel zwei Bremsbelägen und der Bremsscheibe. Auf die innere Mechanik werden über einen pneumatisch betätigten Zylinder die Zylinderkräfte eingeleitet, durch einen Exzentermechanismus, z.B. mit einem Bremsdrehhebel verstärkt und als Zuspannkraft über Gewindespindeln auf Bremsbeläge und Bremsscheibe übertragen, wobei über die Gewindespindeln der Verschleiß von Bremsscheibe und Bremsbelägen ausgeglichen wird.

Da die Bremsbeläge konstruktiv als Verschleißteile ausgelegt werden, sind diese generell weicher als die Bremsscheibe, d.h. die Beläge erfahren über Ihre Gebrauchsdauer eine Änderung der Belagstärke, sie verschleißen. Auch die Bremsscheibe kann verschleißten. Aus diesem Verschleiß ergibt sich die Notwendigkeit, dass eine Verschleißnachstellung die Änderung durch den Verschleiß ausgleicht und somit ein konstantes Luftspiel einstellt. Ein konstantes Luftspiel wird benötigt, um die Ansprechzeiten der Bremse klein zuhalten, die Freigängigkeit der Bremsscheibe zu gewährleisten und eine Hubreserve für Grenzbelastungsfälle vorzuhalten.

Scheibenbremsen insbesondere für Nutzfahrzeuge sind in der Regel mit einer Nachstelleinrichtung ausgerüstet, die auf mindestens eine Stellspindel mit Bewegungsgewinde wirkt. Die Nachstelleinrichtung hält das durch Verschleiß von Bremsbelägen und Bremsscheibe wachsende Lüftspiel der Scheibenbremse konstant. Dazu weist die Nachstelleinrichtung eine Schnittstelle zu einem Aktuator wie z.B. einem Exzenterhebel auf. Die Nachstelleinrichtung darf, solange das Lüftspiel einen definierten Betrag aufweist, das Bewegungsgewinde nicht antreiben. Außerdem muss die Nachstelleinrichtung über einen Überlastschutz verfügen, der bei Kraftschluss zwischen Stellspindel und Reibpaarung wirkt, da ansonsten die Nachstelleinrichtung durch das weiterhin wirkende Antriebsmoment zerstört würde.

Darüber hinaus benötigt die Nachstelleinrichtung einen Freilauf, der im Rückhub des Aktuators verhindert, dass das Bewegungsgewinde in die Gegenrichtung angetrieben wird und sich somit das Lüftspiel wieder vergrößert würde. Zur Realisierung dieser Funktion wird häufig ein herkömmlicher Industriefreilauf eingesetzt. Diese Freiläufe weisen eine hohe mechanische Präzision auf, die durch einen hohen Genauigkeitsgrad mit entsprechend kleinen Toleranzen der Einzelteile bei deren Herstellung erzeugt wird.

Nachteilig wirkt sich die mechanische Präzision eines herkömmlichen Industriefreilaufes auf die Kostenstruktur einer Nachstelleinrichtung für eine Scheibenbremse aus, da die Präzision eines herkömmlichen Industriefreilaufs für die Anwendung in einer Nachstelleinrichtung einer Scheibenbremse nicht unbedingt benötigt wird.

Ein Beispiel einer Verschleißnachstellvorrichtung beschreibt das Dokument DE 10 2004 037 771 A1. Dabei wird eine Antriebsdrehbewegung z.B. von einer Drehmoment-Begrenzungseinrichtung, beispielsweise eine Freilauf- und Überlastkupplungseinrichtung mit einer Kugelrampe, über eine kontinuierlich wirkende Kupplung (Rutschkupplung) auf eine Stellspindel eines Druckstempels weitergeleitet. Das Luftspiel wird dabei kontinuierlich eingestellt.

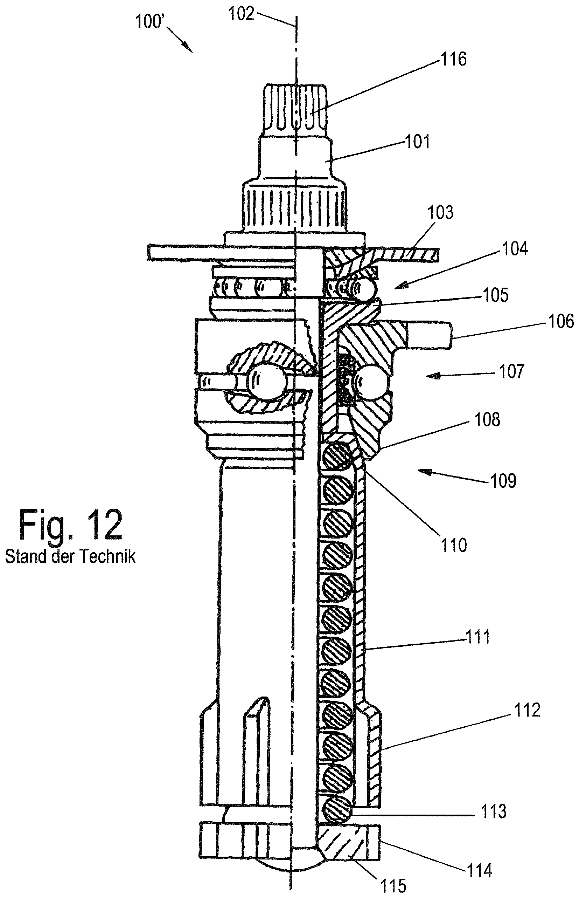

Eine solche Nachstelleinrichtung 100' ist in Fig. 12 gezeigt. Sie besteht im Wesentlichen aus folgenden Funktionselementen:
- Welle 101 mit einer Nachstellerachse 102
- Lagerscheibe 103
- Axiallager 104
- Bundbuchse, bzw. Distanzhülse 105
- Schaltgabel, bzw. Antriebsring 106
- Freilauf- und Überlastkupplungseinrichtung 107
- Kupplungsring 108
- Konuskupplung 109
- Hülsenkonus 110
- Federhülse 111 mit einer Außenprofilierung 112 zur Eingriff mit einer Stellspindel
- Vorspannfeder 113
- Mitnehmerstern 115 mit einer Außenprofilierung 114
- Antriebszapfen 116

Hinsichtlich der Beschreibung wird auf die DE 10 2004 037 711 A1 verwiesen.

Vom Bremsdrehhebel wird eine Schwenkbewegung in die Schaltgabel mit dem Antriebsring 106 und in die Freilauf- und Überlastkupplungseinrichtung 107 der Nachstelleinrichtung eingeleitet.

Es besteht ein ständiger Bedarf in der Fahrzeugtechnik, Gewicht und Kosten, z.B. bei Montage und Wartung, einzusparen, wobei gleichzeitig eine Einsparung an Energie, d.h. Kraftstoff, erfolgen soll.

Die Erfindung hat demnach die Aufgabe, eine Nachstelleinrichtung für eine Scheibenbremse zur Verfügung zu stellen, die gegenüber dem Stand der Technik kostengünstiger herstellbar ist.

Die vorliegende Erfindung löst dieses Problem durch den Gegenstand des Anspruchs 1. Ferner schafft die Erfindung eine Scheibenbremse mit einer erfindungsgemäßen Nachstelleinrichtung.

Nach dem Kennzeichen des Anspruchs 1 ist vorgesehen, dass die Druckfedern im Käfig durch Verdrehen des Käfigs gegenüber dem Innenring und anschließenden formschlüssiges Fixieren des Käfigs am Innenring durch geeignete Mittel vorgespannt sind.

Der Erfindung liegt also der Gedanke zu Grunde, einen Freilauf für eine Nachstelleinrichtung einer Scheibenbremse so zu gestalten, dass wesentliche Bauteile des Freilaufs mit möglichst großen Toleranzen und damit kostengünstig herstellbar sind, wobei auftretende Bauteiltoleranzen durch das Vorspannen der Druckfedern im Käfig durch Verdrehen des Käfigs gegenüber dem Innenring des Freilaufs und anschließendem Fixieren des Käfig am Innenring des Freilaufs kompensiert werden, da dadurch die Klemmrollen des Freilaufs durch die Druckfedern in die Klemmkeile des Innenrings gedrückt werden und so die einwandfreie Funktion des Freilaufs trotz relativ großer Toleranzen der einzelnen Bauteile des Freilaufs sichergestellt wird.

In einer bevorzugten Ausführungsform der Erfindung sind die Klemmwinkel der Klemmkeile mit einem Winkel zwischen 2,6° und 4,2° ausgeführt. Diese relativ großen Toleranzen wirken sich kostenreduzierend und damit vorteilhaft aus. Durch das Vorspannen der Druckfedern des Freilaufs kann trotz der großen Toleranzen der Klemmwinkel die einwandfreie Funktion des Freilaufs sichergestellt werden.

In einer bevorzugten Ausführungsform der Erfindung sind der Innenring und der Au-ßenring des Freilaufs jeweils durch ein Umformverfahren oder ein Urformverfahren hergestellt, das eine Umformung bzw. eine Urformung auf eine Nettogeometrie mit ausreichenden Toleranzen erlaubt. Dadurch kann auf eine spanende Nachbearbeitung des Innenrings und des Außenrings verzichtet werden oder die spanende Nachbearbeitung des Innenrings und des Außenrings auf ein Minimum beschränkt werden. Dadurch lassen sich die Herstellkosten des Innenrings und des Außenrings gegenüber dem Stand der Technik in vorteilhafter Weise reduzieren.

In einer weiteren Ausführungsform der Erfindung ist der Käfig des Freilaufs aus mehreren Käfigsegmenten zusammengesetzt, die jeweils aus einem Kunststoffwerkstoff hergestellt sind. Dadurch wird das Spritzgießwerkzeug, in dem die Käfigsegmente hergestellt werden, in vorteilhafter Weise vereinfacht und damit kostengünstiger gestaltbar. Dies ist besonders dann der Fall, wenn die Käfigsegmente konstruktiv so gestaltet sind, dass deren endgültige Geometrie durch Umbiegen eines Filmscharniers erzeugt wird. Dadurch wird das Spritzgießwerkzeug, in dem die Käfigsegmente hergestellt werden, vorteilhaft weiter vereinfacht, so dass das Werkzeug ohne Schieber und damit besonders kostengünstig konstruiert werden kann.

In einer weiteren Ausführungsform der Erfindung ist der Käfig des Freilaufs einstückig als flächiges Bauteil aus einem Kunststoffwerkstoff hergestellt, aus dem erst bei Montage die endgültige Geometrie des Käfigs durch Umbiegen mehrerer Filmscharniere sowie durch Verrasten von Schnappverbindungen erzeugt wird. Dadurch wird das Spritzgießwerkzeug, in dem der Käfig hergestellt wird, vorteilhaft vereinfacht, so dass das Werkzeug ohne Schieber und damit besonders kostengünstig konstruiert werden kann.

Die Erfindung schafft ferner eine Scheibenbremse mit einer erfindungsgemäßen Nachstelleinrichtung, die durch die erfindungsgemäße Nachstelleinrichtung kostengünstig und damit vorteilhaft hergestellt werden kann.

Weitere vorteilhafte Ausführungen der Erfindung sind den Unteransprüchen zu entnehmen.

Ausführungsbeispiele des erfindungsgemäßen Gegenstandes sind in den Zeichnungen dargestellt und werden im Folgenden näher beschrieben. Es zeigt:
- Figur 1:: eine Schnittdarstellung eines Freilaufs einer erfindungsgemäßen Nachstelleinrichtung;
- Figur 2:: eine räumliche Explosionsdarstellung eines Freilaufs einer erfindungsgemäßen Nachstelleinrichtung nach Fig. 1;
- Figur 3:: eine räumliche Ausschnittsvergrößerung eines Käfigs eines Freilaufs einer erfindungsgemäßen Nachstelleinrichtung nach Fig. 1
- Figur 4:: eine Schnittdarstellung einer Ausführungsvariante eines Freilaufs einer erfindungsgemäßen Nachstelleinrichtung;
- Figur 5:: eine räumliche Explosionsdarstellung eines Freilaufs einer erfindungsgemäßen Nachstelleinrichtung nach Fig. 4;
- Figur 6:: eine räumliche Ausschnittsvergrößerung eines Käfigs eines Freilaufs einer erfindungsgemäßen Nachstelleinrichtung nach Fig. 4 im montierten Zustand des Käfigs;
- Figur 7:: eine räumliche Ausschnittsvergrößerung einer Ausführungsvariante eines Käfigs nach Fig. 6 im nicht montierten Zustand des Käfigs;
- Figur 8:: eine Schnittdarstellung einer weiteren Ausführungsvariante eines Freilaufs einer erfindungsgemäßen Nachstelleinrichtung;
- Figur 9:: eine räumliche Explosionsdarstellung eines Freilaufs einer erfindungsgemäßen Nachstelleinrichtung nach Fig. 8;
- Figur 10:: eine räumliche Ausschnittsvergrößerung eines Käfigs eines Freilaufs einer erfindungsgemäßen Nachstelleinrichtung nach Fig. 8 im nicht montierten Zustand des Käfigs;
- Figur 11:: eine räumliche Ausschnittsvergrößerung eines Käfigs eines Freilaufs einer erfindungsgemäßen Nachstelleinrichtung nach Fig. 8 im montierten Zustand des Käfigs;
- Figur 12:: eine Teilschnittdarstellung einer Nachstellvorrichtung nach dem Stand der Technik; und
- Figur 13:: eine schematische Darstellung einer erfindungsgemäßen Scheibenbremse mit der erfindungsgemäßen Nachstelleinrichtung.

Eine Nachstelleinrichtung 100' nach dem Stand der Technik ist bereits oben im Zusammenhang mit Fig. 12 oben beschrieben und soll hier nicht wiederholt werden.

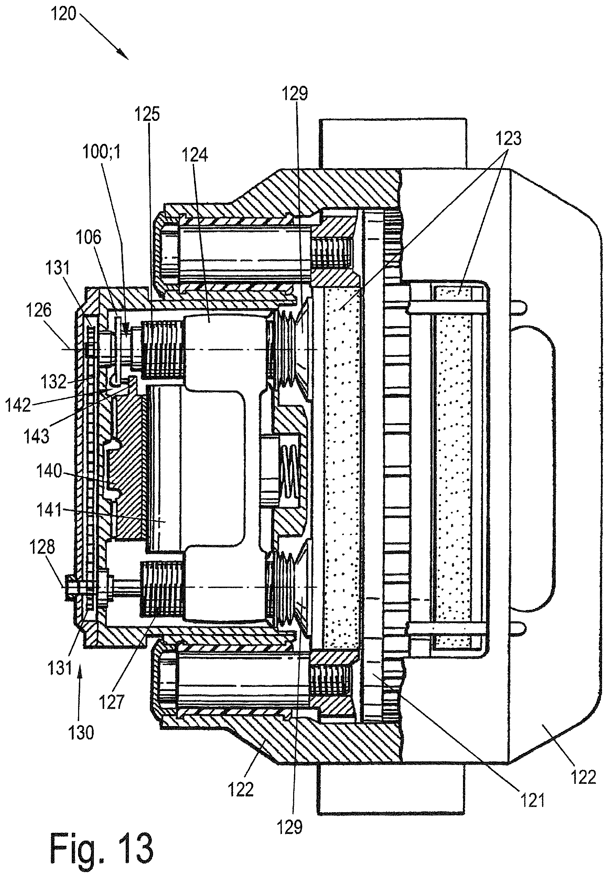

Im Folgenden wird ein Klemmrollenfreilauf für die Nachstelleinrichtung 100 einer Scheibenbremse 120 beschrieben. Die Scheibenbremse 120 ist in Fig. 13 dargestellt und wird unten erläutert. Bei einem Klemmrollenfreilauf drücken Druckfedern 12 die Klemmrollen 7 leicht zwischen einen mit den Klemmrollen 7 zusammen rotierenden Innenring 2 des Freilaufs 1 und einem Außenring 3 des Freilaufs 1, so dass sich die Klemmrollen 7 abhängig von deren Drehung in den Aufnahmeräumen bzw. Klemmkeilen 9 verkeilen.

Weil sich die Aufnahmeräume der Klemmrollen 7 von den Druckfedern 12 weg verjüngen, ist das übertragene Drehmoment größer, je weiter der Innenring 2 gegenüber dem Außenring 3 verdreht wird. Durch passende Auswahl des Anstell- oder Klemmwinkels des sich ausbildenden Klemmkeiles 9 ist die Ausführung auch bei bester Schmierung - physikalisch bedingt - absolut rutschsicher, es herrscht der Zustand der Selbsthemmung. Der Anstell- oder Klemmwinkel des Klemmkeils 9 muss dazu so gewählt werden, dass er kleiner gleich dem Arcustangens der Gleitreibungszahl µ ist, die sich zwischen der Klemmrolle 7 und dem Außenring 3 einstellt.

Wird der Verjüngungs- oder Klemmwinkel größer als arctan (µ) gewählt, rutscht der Freilauf 1 und ist unzuverlässig.

Kehrt man die Drehrichtung um oder ist die äußere Drehzahl größer als die innere Drehzahl, rollen die Klemmrollen 7 in Richtung der Druckfeder 12, die Klemmung wird somit aufgehoben.

Für die Nachstelleinrichtung 100 einer Scheibenbremse 120 für Nutzfahrzeuge wird die Funktion eines Freilaufs 1 dafür benötigt, damit im Rückhub der Nachstelleinrichtung 100 ein Aktuator der Nachstelleinrichtung 100 eine Verstellspindel nicht zurückdreht und somit das Lüftspiel der Scheibenbremse einen definierten Wert beibehält.

Im Vorhub der Nachstelleinrichtung 100 wird der Kraftschluss des Freilaufs 1 benötigt, um den Antrieb der Verstellspindel zu gewährleisten. Dabei ist lediglich zu gewährleisten, dass das Moment, das der Freilauf 1 übertragen kann, groß genug ist, so dass der Freilauf 1 nicht durchrutscht. Da das Ansprechmoment des Überlastschutzes und damit des Freilaufs 1 genau definiert werden kann, ist es möglich, dass sich die Funktionsmaße der Bauteile des Freilaufs 1 innerhalb relativ großer Toleranzen bewegen können, ohne dass eine einwandfreie Funktion des Freilaufs 1 eingebüßt wird.

Im Auslegungsfall eines solchen Freilaufs 1 für eine Nachstelleinrichtung 100 einer Scheibenbremse 120 ist ein minimaler Reibwert von µ=0,08 einzuhalten, was einen Verjüngungs- oder Klemmwinkel der Klemmkeile 9 von ca. 2,6° bis ca. 4,2° zulässt. Da das zu übertragende Mindest-Klemmmoment auch erreicht wird, wenn alle Klemmkeile 9 des Freilaufs 1 den maximalen Klemmwinkel von 4,2° nicht überschreiten, ist lediglich zu gewährleisten, dass je Klemmkeil 9 des Freilaufs 1 ein Klemmwinkel von 2,6° bis 4,2° eingehalten wird. Bei kleinen Winkelbeträgen des Klemmwinkels ist lediglich zu gewährleisten, dass die für die angestrebte Lebensdauer des Freilaufs 1 nicht zu überschreitende Hertzsche Pressung eingehalten wird.

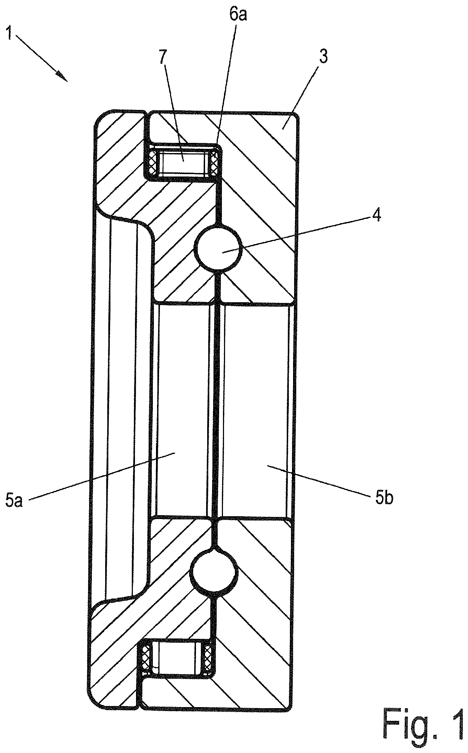

In Fig. 1 ist ein erfinderischer Freilauf 1 einer Nachstelleinrichtung 100 (hier nicht im Einzelnen dargestellt, jedoch im Zusammenhang mit Fig. 12 leicht vorstellbar) einer Scheibenbremse 120 (siehe Fig. 13), insbesondere für Nutzfahrzeuge, dargestellt. Der Freilauf 1 weist einen Innenring 2 sowie einen Außenring 3 auf. Der Innenring 2 und der Außenring 3 des Freilaufs 1 bilden zusammen mit mehreren Wälzlagerkugeln 4 ein Axialkugellager, durch die der Innenring 2 des Freilaufs 1 gegenüber dem Außenring 3 des Freilaufs 1 drehbar gelagert ist. Der Freilauf 1 weist darüber hinaus eine Durchgangsbohrung 5a, 5b auf, die den Innenring 2 und den Außenring 3 jeweils durchgreift. Der Freilauf 1 weist ferner einen Käfig 6a auf, in dem mehrere Klemmrollen 7 gehalten sind. Der Käfig 6a ist zwischen dem Innenring 2 und dem Außenring 3 in radialer Richtung zur Durchgangsbohrung 5a, 5b angeordnet und wird von dem Innenring 2 und dem Außenring 3 vollständig umschlossen.

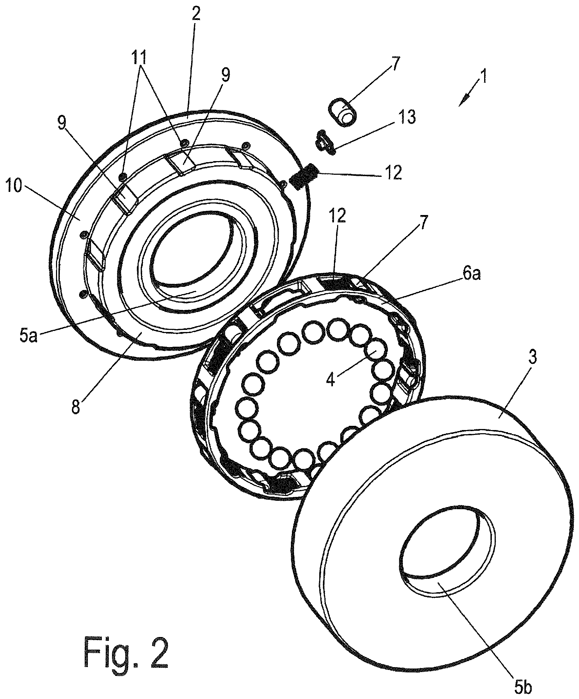

In Fig. 2 ist der Freilauf 1 aus Fig. 1 in einer räumlichen Explosionsdarstellung gezeigt.

Der Innenring 2 weist einen Absatz 8 auf. Der Absatz 8 weist auf seinem Umfang mehrere Klemmkeile 9 auf, die in einer regelmäßigen Winkelteilung auf dem Umfang des Ansatzes 8 angeordnet sind. Der Innenring 2 weist ferner einen Schulterbereich 10 auf. Der Schulterbereich 10 weist parallel zur Durchgangsbohrung 5a verlaufende Bohrungen 11 auf, die in einer regelmäßigen Winkelteilung in Umfangsrichtung angeordnet sind. Die schulterbereichabgewandten Seite des Absatzes 8 weist eine Rille auf, in der die Wälzlagerkugeln 4 im montierten Zustand des Freilaufs 1 angeordnet sind und gemeinsam mit dem Innenring 2 und dem Außenring 3 ein Axialkugellager bilden.

Auf Grund der oben erläuterten relativ geringen Genauigkeitsanforderungen für den Innenring 2 und insbesondere für die Klemmkeile 9 ist der Innenring 2 vorzugsweise durch ein Umformverfahren hergestellt, das eine Umformung auf eine Nettogeometrie mit ausreichenden Toleranzen erlaubt, wie dies z.B. bei einem Kaltfließpressverfahren der Fall ist. In diesem Fall ist der Innenring 2 vorzugsweise aus Stahl hergestellt. Alternativ kann der Innenring 2 aber auch durch ein Urformverfahren hergestellt sein, dass eine Urformung auf eine Nettogeometrie mit ausreichenden Toleranzen erlaubt, wie dies z.B. bei einem pulvermetallurgisches Sinterverfahren der Fall ist. In dem Fall ist der Innenring 2 aus einem Pulvermetall, vorzugsweise Sinterstahl hergestellt. Alternativ kann der Innenring 2 in vorteilhafter Weise aber auch aus einem technischen Keramikwerkstoff durch ein pulvermetallurgisches Sinterverfahren hergestellt sein. Erfindungswesentlich hinsichtlich der Herstellung des Innenring 2 ist, dass auf eine kostenintensive Zerspanung eines Innenring-Rohteils zur Erreichung entsprechend enger, in der Wälzlagerindustrie üblichen Bauteiltoleranzen, insbesondere enger Toleranzen der Klemmkeile 9 möglichst verzichtet wird. Die Herstellung des Außenrings 3 erfolgt analog zu den Ausführungen hinsichtlich der Herstellung des Innenrings 2

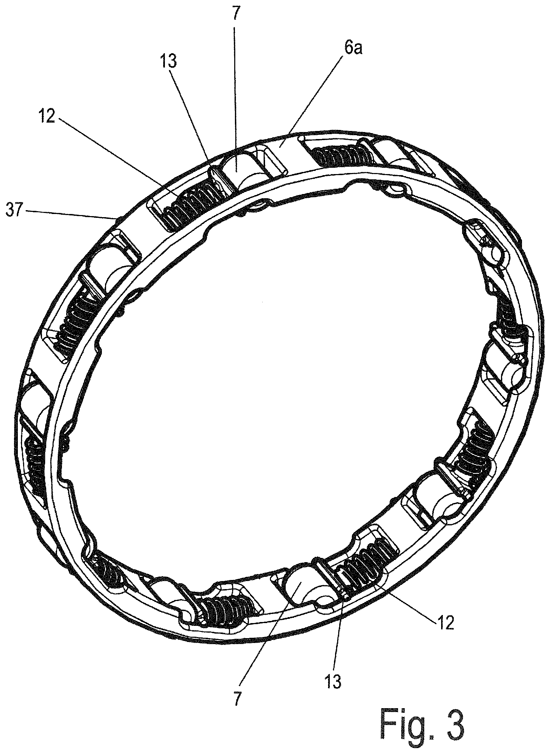

Ebenfalls in Fig. 2 ist eine Druckfeder 12 dargestellt. Die Druckfeder 12 ist hier als Schraubenfeder ausgeführt und in ihrem montierten Zustand an dem Käfig 6a aufgehängt. Die Druckfeder 12 wirkt im montierten Zustand in Umfangsrichtung auf ein Druckstück 13, das wiederum auf die Klemmrolle 7 wirkt und im montierten Zustand durch die Druckfeder 12 die Klemmrolle 7 in den Klemmkeil 9 drückt. Die Druckfeder 12, das Druckstück 13 und die Klemmrolle 7 bilden also eine funktionale Baugruppe des Freilaufs 2. Diese Baugruppe ist mehrfach, in einer regelmäßigen Winkelteilung am Umfang des Käfigs 6a angeordnet und durch den Käfig 6a jeweils gehalten. Das Bestücken des Käfigs 6a mit den Bauteilen 12, 13, 7 der funktionalen Baugruppe erfolgt in dieser Ausführungsvariante der Erfindung in vorteilhafter Weise mit einer zylindrischen Hilfsvorrichtung, die hier nicht dargestellt ist. Ein fertig vormontierter Käfig 6a ist in Fig. 3 dargestellt.

Der Käfig 6a ist vorzugsweise aus einem Kunststoffwerkstoff in einem Spritzgießverfahren hergestellt. Durch seine geschlossene konstruktive Gestaltung ist dafür ein Spritzgießwerkzeug mit mehreren Schiebern erforderlich, wobei die Schieber solche Geometrieausprägungen an dem Käfig 6a ausformen, die auf Grund ihrer Anordnung oder Geometrie parallel zur Trennebene des Werkzeugs oder räumlich geneigt zur Trennebene des Werkzeugs entformt werden müssen.

Das Druckstück 13 ist hier -rein beispielhaft- als separates Bauteil dargestellt, das aus einem Kunststoffwerkstoff in einem Spritzgießverfahren hergestellt ist. Alternativ kann das Druckstück 13 auch durch Umspritzen eines Endes der Druckfeder 12 realisiert werden. Möglich ist auch der Verzicht auf das Druckstück 13, wenn dessen Funktion in die Druckfeder 12, z.B. als gebogener Drahtansatz, integriert ist.

Die in den Käfig 6a gemeinsam mit den Klemmrollen 7 und dem Druckstücken 13 eingesetzten Druckfedern 12 werden im Rahmen der Montage des Freilaufs vorgespannt. Für den Vorspannvorgang wird der mit den funktionalen Baugruppen vormontierte Käfig 6a auf den Innenring 2 des Freilaufs 1 gesetzt und verdreht, bis die Klemmrollen 7 in die Klemmkeile 9 des Innenrings 2 einrasten. Der Käfig 6a wird dann weiter gedreht und axial durch die Bohrungen 11 im Schulterbereich 10 des Innenrings 2 und einem korrespondierenden Pin 37, der einstückig am Käfig 6a angeformt ist, arretiert.

Durch die so erfolgte Vorspannung der Druckfedern 12 wird gewährleistet, dass die Klemmrollen 7 trotz relativ großer Toleranzen des Klemmwinkels in den Klemmkeilen 9 ihre Funktion sicher übernehmen können. Wesentliches konstruktives Kriterium für die Auslegung der Druckfeder 12 ist ein möglichst großer wirksamer Federweg, um die jeweilige Klemmrolle 7 sicher in den entsprechenden Klemmkeil 9 zu drücken, auch wenn die Klemmwinkel der Klemmkeile 7 mit relativ groben Toleranzen gefertigt sind.

An den Käfig 6a und die Druckfeder 12 werden keine hohen Genauigkeitsforderungen gestellt, da die Federkraft, mit der die Klemmrollen 7 in die Klemmkeile 9 gedrückt werden, sehr gering sein darf. Durch eine geringe Federkraft ist das Schleppmoment des Freilaufs 1 im Freilaufbetrieb sehr klein. Somit wird die Funktion des Freilaufs 1 auch dann sicher gewährleistet, wenn die Federkraft jeweils relativ stark variiert, was einen relativ stark unterschiedlichen Federweg im jeweiligen Klemmkeil 9 zulässt. Dieses Konzept erlaubt es somit, eine Reihe von Bauteilen 2, 3, 6a, 12, 13 eines erfindungsgemäßen Freilaufs 1 mit breitem Toleranzband und damit kostengünstig auszulegen.

Um Wiederholungen zu vermeiden, werden im Folgenden nur Abweichungen bzw. Änderungen und Ergänzungen zu der oben beschriebenen Ausführungsvariante eines erfindungsgemäßen Freilaufs 1 nach Fig. 1 bis Fig. 3 beschrieben.

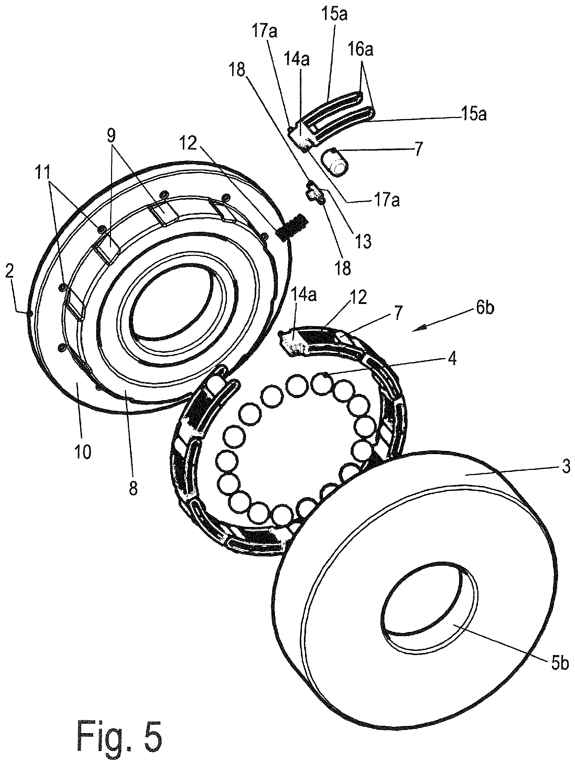

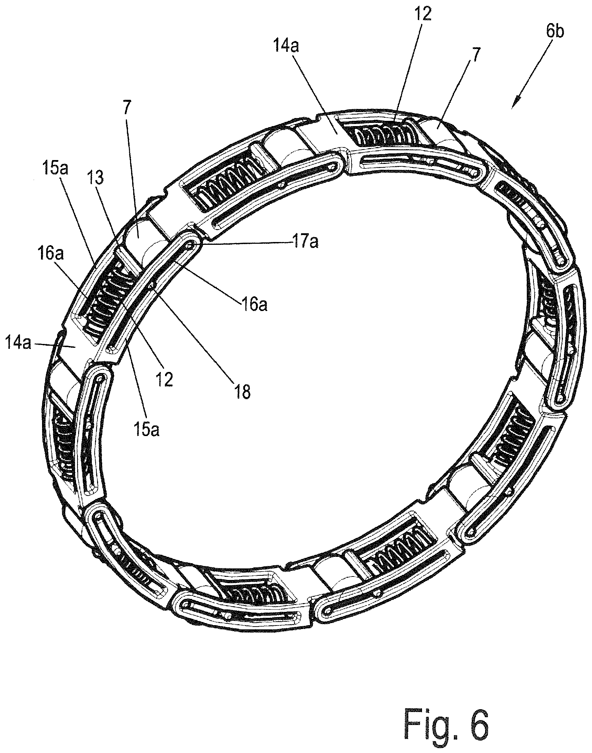

In Fig. 5 und Fig. 6 ist eine Ausführungsvariante der Erfindung dargestellt, bei der der Käfig 6b mehrgliedrig als Kette aus mehreren Käfiggliedern 14a hergestellt ist. Jedes Käfigglied 14a nimmt je eine funktionale Baugruppe des Freilaufs 2, bestehend aus der Druckfeder 12, dem Druckstück 13 und der Klemmrolle 7 auf.

Die so vormontierten Käfigglieder 14a werden über jeweils zwei Laschen 15a, die jeweils eine Öse 16a aufweisen, und Pins 17a, auf die jeweils die Öse 16a eingehängt wird, miteinander zu dem Käfig 6b verbunden. Durch die Gestaltung der Lasche 15a mit einer durchgängigen Öse 16a weist die Lasche 15a eine relativ geringe Steifigkeit auf, so dass Toleranzen durch eine elastische Verformung bzw. Eigendehnung der Lasche 15a einfach und damit vorteilhaft überbrückt werden können. In dieser Ausführungsvariante der Erfindung ist der Schieber 13 über einstückig mit dem Schieber 13 verbundene Führungsansätze 18 in der Öse 16a geführt.

Die Gestaltung des Käfigs 6b als Kette aus Käfiggliedern 14a erlaubt eine einfache Montage des Käfigs 6b, für die keine Hilfsvorrichtung benötigt wird, da die einzelnen Käfigglieder 14a erst jeweils mit der Druckfeder 12, dem Druckstück 13 und der Klemmrolle 7 bestückt werden und anschließend durch das folgende Käfigglied 14a bzw. dessen Laschen 15a miteinander verspannt werden.

Bei einem Käfigglied 14a ist ein Pin 17a länger ausgeführt, als bei den die anderen Käfiggliedern 14a, so dass dieser Pin 17a zur dauerhaften Vorspannung der Druckfedern 12 mit Formschluss zum Innenring 2 des Freilaufs 1 über die Bohrungen 11 im Innenring 2 verwendet wird.

Die Käfigglieder 14a des Käfigs 6b sind vorzugsweise aus einem Kunststoffwerkstoff in einem Spritzgießverfahren hergestellt. Durch die konstruktive Gestaltung der Kettenglieder 14a, insbesondere durch die Gestaltung der Lasche 15a mit einer durchgehenden Öse 16a, ist dafür ein Spritzgießwerkzeug mit Schiebern erforderlich, wobei die Schieber solche Geometrieausprägungen an den Käfiggliedern 14a ausformen, die auf Grund ihrer Anordnung oder Geometrie parallel zur Trennebene des Werkzeugs oder räumlich geneigt zur Trennebene des Werkzeugs entformt werden müssen.

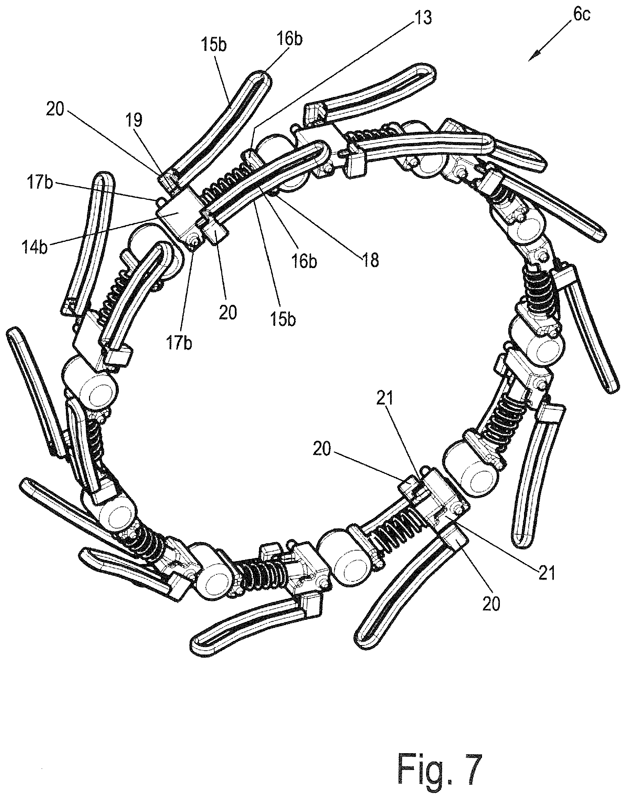

In Fig. 7 ist eine weitere Ausführungsvariante der Erfindung dargestellt, bei der der Käfig 6c mehrgliedrig als Kette aus mehreren Käfiggliedern 14b ausgeführt ist. Jedes Käfigglied 14b nimmt je eine funktionale Baugruppe des Freilaufs 2, bestehend aus der Druckfeder 12, dem Druckstück 13 und der Klemmrolle 7 auf.

Die so vormontierten Käfigglieder 14b werden über jeweils zwei Laschen 15b, die jeweils eine Öse 16b aufweisen, und mit dem Käfiggliedern 14b jeweils einstückig verbundenen Pins 17b, auf die jeweils die Öse 16b eingehängt wird, miteinander zu dem Käfig 6c verbunden. Abweichend von der Ausführungsvariante nach Fig. 5 und Fig. 6 sind die Ösen 16b der einzelnen Käfigglieder 14b jeweils über Filmscharniere 19 an das jeweilige Käfigglied 14b angesetzt. In dieser Ausführungsvariante der Erfindung ist der Schieber 13 ebenfalls über einstückig mit dem Schieber 13 verbundene Führungsansätze 18 in der Öse 16a geführt.

Durch die Gestaltung der Lasche 15b mit einer durchgängigen Öse 16b weist die Lasche 15b eine relativ geringe Steifigkeit auf, so dass Toleranzen durch eine elastische Verformung bzw. Eigendehnung der Lasche 15b einfach und damit vorteilhaft überbrückt werden können.

Die Gestaltung des Käfigs 6c als Kette aus Käfiggliedern 14b erlaubt eine einfache Montage des Käfigs 6c, für die keine Hilfsvorrichtung benötigt wird, da die einzelnen Käfigglieder 14b erst jeweils mit der Druckfeder 12, dem Druckstück 13 und der Klemmrolle 7 bestückt werden und anschließend durch das folgende Käfigglied 14b bzw. dessen Laschen 15b miteinander verspannt werden. Dazu werden die jeweiligen Laschen 15b über die jeweiligen Filmscharniere 19 zunächst um 90° verdreht. Dabei rastet ein Laschenansatz 20 hinter einen Steg 21, der einstückig an das Käfigglied 14c und verriegelt so die jeweilige Lasche 15b in ihrer finalen Lage und Position. Diese Funktionalität erleichtert die Montage der Druckfeder 12, des Druckstücks 13 und der Klemmrolle 7, da zunächst eine Lasche 15b des Käfigglieds 14c geschlossen werden kann, um dem Druckstück 12 über den Führungsansatz 18, der in die Öse 16b der Lasche 15b eingesetzt wird, ein Führung zu gewähren.

Bei einem Käfigglied 14b ist ein Pin 17b länger ausgeführt, als bei den die anderen Käfiggliedern 14b, so dass dieser Pin 17b zur dauerhaften Vorspannung der Druckfedern 12 mit Formschluss zum Innenring 2 des Freilaufs 1 über die Bohrungen 11 des Innenrings 2 verwendet wird.

Die Käfigglieder 14b des Käfigs 6c sind vorzugsweise aus einem Kunststoffwerkstoff in einem Spritzgießverfahren hergestellt. Durch die konstruktive Gestaltung der Kettenglieder 14b, insbesondere durch die Gestaltung der Lasche 15b, die durch ein Filmscharnier 19 mit dem Käfigglied 14b einstückig verbunden ist, vereinfacht sich ein Spritzgießwerkzeug zur Herstellung eines Käfigglieds 14b, da dadurch sämtliche Geometrieausprägungen an den Käfiggliedern 14b orthogonal zur Trennebene des Werkzeugs entformt werden können. Daraus folgend sind keine Schieber an einem solchen Spritzgießwerkzeug erforderlich.

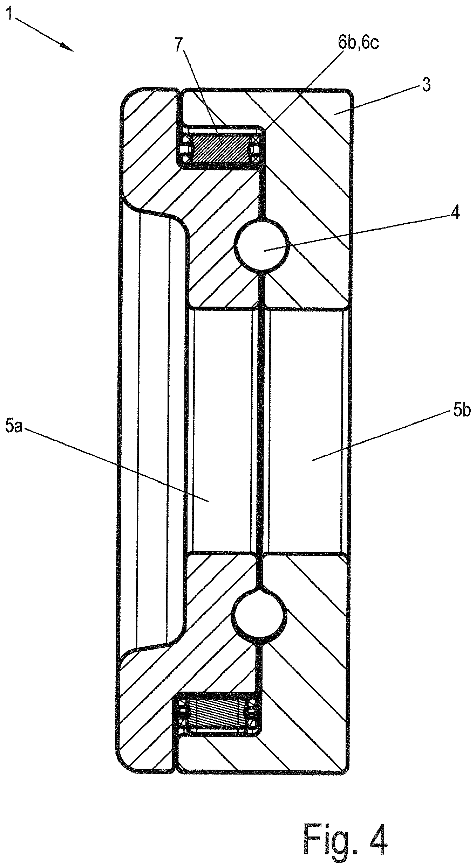

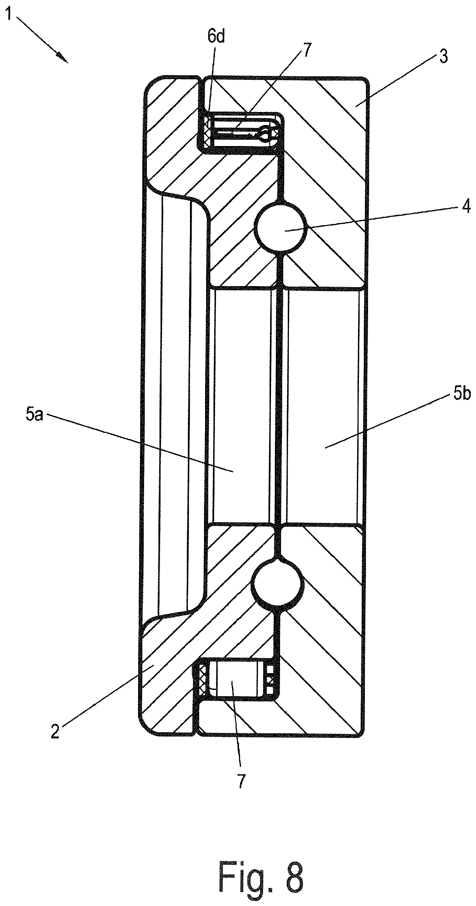

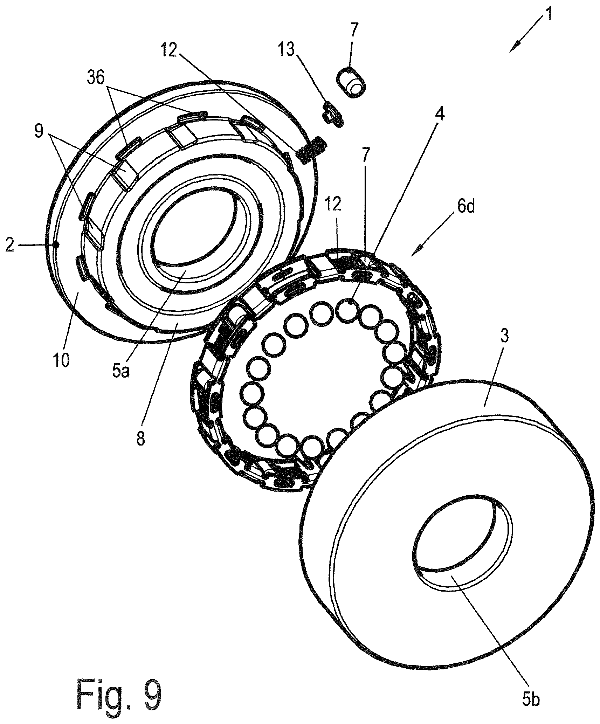

In Fig. 8 bis Fig. 11 ist eine weitere Ausführungsvariante der Erfindung dargestellt, bei der der Käfig 6d - abweichend zu den Ausführungsformen nach Fig. 4 bis Fig. 7 und ähnlich zu der Ausführungsform nach Fig. 1 bis Fig. 3 - einstückig ausgeführt ist.

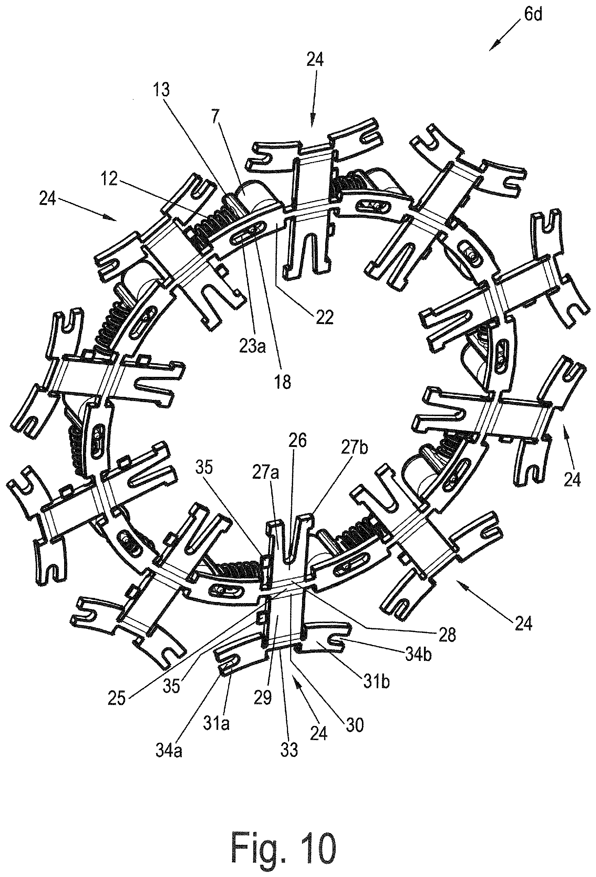

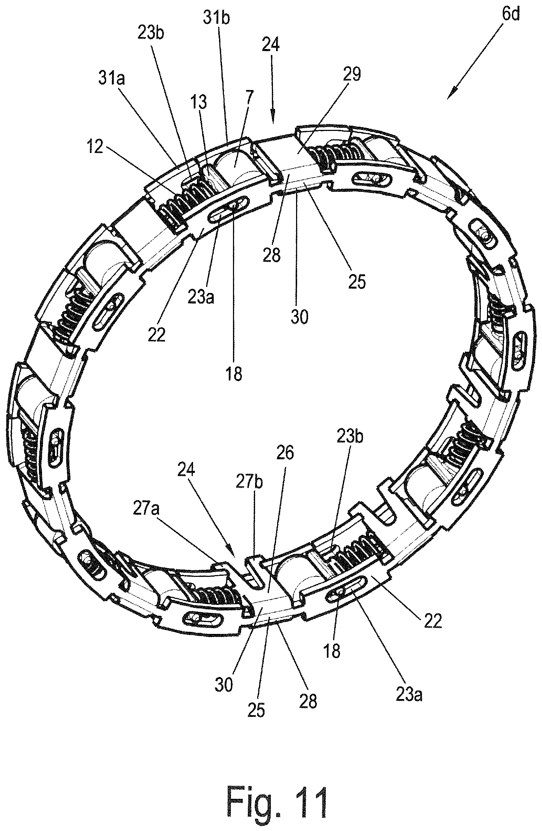

In Fig. 10 ist der Käfig 6d in seinem unmontierten und in Fig. 11 in seinem montierten Zustand dargestellt. Der Käfig 6d ist in seinem unmontierten Zustand abweichend zu der Ausführungsform nach Fig. 1 bis Fig. 3 als flaches Bauteil gestaltet. Der Begriff "flach" bedeutet in diesem Fall, dass sämtliche funktionale geometrische Ausgestaltungen des Käfigs 6d in einer Ebene -hier der Zeichnungsebene- angeordnet sind und sich in einer dazu orthogonalen Ebene nur die Wandstärke des Käfigs 6d erstreckt.

Der Käfig 6d weist mehrere Laschenabschnitte 22 auf. Dies ist in Fig. 10 gut erkennbar dargestellt. Die Laschenabschnitte 22 sind in einer regelmäßigen Winkelteilung auf dem Umfang des Käfigs 6d verteilt. Jeder Laschenabschnitt 22 weist ein Langloch 23a auf. Das Langloch 23a dient zu Führung des Druckstücks 13, dass das Langloch 23a im montierten Zustand des Käfigs 6d mit seinem Führungsansatz 18 durchgreift. Der jeweilige Laschenabschnitt 22 ist jeweils von einem Riegelabschnitt 24 begrenzt, so dass die Riegelabschnitte 24 ebenfalls in einer regelmäßigen Winkelteilung auf dem Umfang des Käfigs 6d verteilt sind.

Der Riegelabschnitt 24 weist einen Verbindungssteg 25 auf, über den der Riegelabschnitt 24 jeweils mit dem Laschenabschnitt 22 einstückig verbunden ist. Der Riegelabschnitt 24 weist ferner einen Schnapphakenabschnitt 26 auf, der zwei symmetrisch gegenüberliegende Schnapphaken 27a und 27b ausformt. Der Schnapphakenabschnitt 26 weist im unmontierten Zustand des Käfigs 6d mit seinen Schnapphaken 27a, 27b jeweils radial in Richtung Mittelpunkt des kreisförmigen Käfigs 6d. Der Verbindungssteg 25 und der Schnapphakenabschnitt 26 sind durch ein Filmscharnier 28 verbunden.

An den Verbindungssteg 25 schließt sich ein Gegenabschnitt 29 an, der ebenfalls mit einem Filmscharnier 30 mit dem Verbindungsabschnitt 25 verbunden ist. An dem Gegenabschnitt 29 schließen sich zwei Teillaschenabschnitte 31a und 31 b an, die über ein Filmscharnier 32 mit dem Gegenabschnitt 29 verbunden sind. Die beiden Teillaschenabschnitte 31a und 31b weisen eine Nut 33 auf, in die im montierten Zustand des Käfigs 6d die beiden Schnapphaken 27a und 27b einrasten. Die beiden Teillaschenabschnitte 31a und 31b weisen jeweils einen Einschnitt 34a, 34b auf. Die beiden Einschnitte 34a und 34b bilden im montierten Zustand des Käfigs 6d ein Langloch 23b, siehe dazu auch Fig. 11. Der Gegenabschnitt 29 und mit ihm auch die beiden Teillaschenabschnitte 31a und 31b weist bzw. weisen im unmontierten Zustand des Käfigs jeweils radial vom Mittelpunkt des kreisförmigen Käfigs 6d weg. Der Schnapphakenabschnitt 26 und der Gegenabschnitt 29 weisen jeweils einen Absatz 35 auf, auf dem sich im montierten Zustand des Käfigs 6d die Druckfeder 12 abstützt.

Bei der Montage des Käfigs 6d wird zunächst an einem Riegelabschnitt 24 der Gegenabschnitt 29 über das Filmscharnier 30 um 90° gebogen. Danach wird analog dazu der Schnapphakenabschnitt 26 über das Filmscharnier 28 um 90° gebogen. Nun kann die Montage der Druckfeder 12 des Druckstücks 13 erfolgen. Die Druckfeder stützt sich dabei auf den beiden Absätzen 35 ab, während das Druckstück 13 über seinen einen Führungsansatz 18 in dem Langloch 23a des Laschenabschnitts 22 geführt wird. Danach werden die beiden Teillaschenabschnitte 31a und 31b über das Filmscharnier 32 wiederum um 90° gebogen, so dass die beiden Teillaschenabschnitte 31a, 31b nun dem Laschenabschnitt 22 gegenüberliegen und der andere Führungsansatz 18 des Druckstücks die nun das Langloch 23b bildenden Einschnitte 34a und 34b der Teillaschenabschnitte 31a, 31b durchgreift. Danach werden die beiden Schnapphaken 27a und 27b des Schnapphakenabschnitts 26 in die Nut 33 des der beiden Teillaschenabschnitte 31a, 31b eingerastet. Die Montage der Klemmrolle 7 kann erfolgen, wenn ein benachbarter Riegelabschnitt 24 nach der oben beschriebenen Weise montiert wurde. Dadurch wird der Käfig 6d sukzessive bzw. abschnittsweise montiert.

Des Weiteren wird hierbei der Überstand der Schnapphaken 27a, 27b in axialer Richtung des Käfigs 6b dazu genutzt, den Käfig 6b mit einer in den Innenring 2 eingebrachten korrespondierenden Gegenkontur 36 zu verspannen.

Der Käfig 6d ist vorzugsweise aus einem Kunststoffwerkstoff in einem Spritzgießverfahren hergestellt. Durch die konstruktive Gestaltung des Käfigs 6d als flaches Bauteil vereinfacht sich ein Spritzgießwerkzeug zur Herstellung eines Käfigs 6d, da dadurch sämtliche Geometrieausprägungen des Käfigs 6d orthogonal zur Trennebene des Werkzeugs entformt werden können. Daraus folgend sind keine Schieber an einem solchen Spritzgießwerkzeug erforderlich.

Eine Scheibenbremse 120, insbesondere für ein Nutzfahrzeug, weist eine Nachstelleinrichtung 100 (hier nicht dargestellt, aber im Zusammenhang mit Fig. 12 leicht vorstellbar) auf, die auf mindestens eine Stellspindel 125 mit Bewegungsgewinde wirkt. Die Nachstelleinrichtung 100 hält das durch Verschleiß von Bremsbelägen 123 und Bremsscheibe 121 wachsende Lüftspiel der Scheibenbremse 120 konstant. Darüber hinaus weist die Nachstelleinrichtung 100 den Freilauf 1 auf, der im Rückhub der Nachstelleinrichtung 100 verhindert, dass ein Bewegungsgewinde der Stellspindel 125 in die Gegenrichtung angetrieben wird und sich somit das Lüftspiel wieder vergrößert würde.

Dazu zeigt Fig. 13 eine schematische Darstellung einer erfindungsgemäßen Scheibenbremse 120 mit der erfindungsgemäßen Nachstelleinrichtung 100 mit dem Freilauf 1.

Zu Aufbau und Funktion einer pneumatischen Scheibenbremse nach Fig. 13 wird auf die entsprechende, ausführliche Beschreibung der DE 197 29 024 C1 verwiesen. In der Fig. 13 sind hier die folgenden Komponenten angegeben: Scheibenbremse 120, Bremsscheibe 121, Bremssattel 122, Bremsbeläge 123, Traverse 124, eine erste Stellspindel 125 mit einer Spindelachse 126 und eine zweite Stellspindel 127 mit einer zweiten Spindelachse 128, Druckstücke 129, eine Synchroneinheit 130 mit Kettenrädern 131, Kette 132, ein Drehhebel 140 mit Exzenter 141.

Der Drehhebel 140 weist ein Antriebselement 143 auf, das mit einer Schaltgabel des Antriebsrings 106 der Nachstelleinrichtung 100 mit dem Freilauf 1 in Zusammenwirkung steht. Das Antriebselement 143 und der Antriebsring 106 bilden einen Nachstellerantrieb 142 für die Nachstelleinrichtung 100. Die Nachstelleinrichtung 100 ist hier in der ersten Stellspindel 125 angeordnet. Die Nachstellvorrichtung 1 wird nun näher erläutert. Die Nachstellvorrichtung 1 wäre auch für eine elektromotorisch betätigte Scheibenbremse geeignet.

Die Bremsscheibe 121 ist von dem, hier als Schwimmsattel ausgeführten, Bremssattel 122 übergriffen. Beiderseits der Bremsscheibe 121 ist ein Bremsbelag 123 angeordnet. In diesem Ausführungsbeispiel ist die Scheibenbremse 120 als zweistempelige Bremse mit den zwei Stellspindeln 125 und 127 ausgebildet.

Der zuspannseitige Bremsbelag 123 steht mit den Stellspindeln 125, 127 über die Druckstücke 129 in Verbindung. Der andere, reaktionsseitige Bremsbelag 123 ist auf der anderen Seite der Bremsscheibe 121 im Bremssattel 122 festgelegt. Die Stellspindeln 125, 127 sind jeweils in der Traverse 124, die auch als Brücke bezeichnet wird, in Gewinden verdrehbar angeordnet.

Die Traverse 124 und somit die Stellspindeln 125 und 127 sind von einer Zuspannvorrichtung, hier der Drehhebel 140, betätigbar.

Die Scheibenbremse 120 kann unterschiedliche Kraftantriebe aufweisen. Der Drehhebel 140 wird hier z.B. pneumatisch betätigt. Der Drehhebel 140 ist mit dem

Die beiden Stellspindeln 125, 127 sind in nicht näher beschriebener Weise durch eine Synchroneinheit 130 mit Kettenrädern 131 und einer Kette 132 verdrehbar gekoppelt.

Die Erfindung ist durch die oben beschriebenen Ausführungsbeispiele nicht eingeschränkt, sondern im Rahme der Ansprüche modifizierbar.

So ist es denkbar, dass die Nachstelleinrichtung 100 mit dem Freilauf 1 auch für einstempelige Scheibenbremsen und für Scheibenbremsen mit mehr als zwei Stellspindeln eingesetzt werden kann.

### Bezugszeichenliste

- 1: Freilauf
- 2: Innenring
- 3: Außenring
- 4: Wälzlagerkugel
- 5a: Durchgangsbohrung
- 5b: Durchgangsbohrung
- 6a: Käfig
- 6b: Käfig
- 6c: Käfig
- 6d: Käfig
- 7: Klemmrolle
- 8: Absatz
- 9: Klemmkeil
- 10: Schulterbereich
- 11: Bohrung
- 12: Druckfeder
- 13: Druckstück
- 14a: Käfigglied
- 14b: Käfigglied
- 15a: Lasche
- 15b: Lasche
- 16a: Öse
- 16b: Öse
- 17a: Pin
- 17b: Pin
- 18: Führungsansatz
- 19: Filmscharnier
- 20: Laschenansatz
- 21: Steg
- 22: Laschenabschnitt
- 23a: Langloch
- 23b: Langloch
- 24: Riegelabschnitt
- 25: Verbindungssteg
- 26: Schnapphakenabschnitt
- 27a: Schnapphaken
- 27b: Schnapphaken
- 28: Filmscharnier
- 29: Gegenabschnitt
- 30: Filmscharnier
- 31a: Teillaschenabschnitt
- 31b: Teillaschenabschnitt
- 32: Filmscharnier
- 33: Nut
- 34a: Einschnitt
- 34b: Einschnitt
- 35: Absatz
- 36: Gegenkontur
- 37: Pin

- 100, 100': Nachstelleinrichtung
- 101: Welle
- 102: Nachstellerachse
- 103: Lagerscheibe
- 104: Axiallager
- 105: Distanzhülse
- 106: Antriebsring
- 107: Freilauf- und Überlastkupplungseinrichtung
- 108: Kupplungsring
- 109: Konuskupplung
- 110: Hülsenkonus
- 111: Federhülse
- 112: Außenprofilierung
- 113: Vorspannfeder
- 114: Außenprofilierung
- 115: Mitnehmerstern
- 116: Antriebszapfen

- 120: Scheibenbremse
- 121: Bremsscheibe
- 122: Bremssattel
- 123: Bremsbeläge
- 124: Traverse
- 125: Erste Stellspindel
- 126: Erste Spindelachse
- 127: Zweite Stellspindel

- 128: Zweite Spindelachse
- 129: Druckstück
- 130: Synchroneinheit
- 131: Kettenräder
- 132: Kette
- 140: Drehhebel
- 141: Exzenter
- 142: Nachstellerantrieb
- 143: Antriebselement

## Patentansprüche

1. Nachstelleinrichtung (100) für eine Scheibenbremse (120), insbesondere für Nutzfahrzeuge, mit einem Freilauf (1),
a. wobei der Freilauf (1) einen Innenring (2) sowie einen Außenring (3) aufweist und
b. der Freilauf (1) darüber hinaus eine Durchgangsbohrung (5a, 5b) aufweist, die den Innenring (2) und den Außenring (3) jeweils durchgreift,
**dadurch gekennzeichnet, dass**
der Innenring (2) und der Außenring (3) zusammen mit mehreren Wälzlagerkugeln (4) ein Axialkugellager bilden, durch die der Innenring (2) gegenüber dem Außenring (3) drehbar gelagert ist und
c. der Freilauf (1) ferner einen Käfig (6a, 6b, 6c, 6d) aufweist, in dem mehrere Klemmrollen (7) mit Druckfedern (12) und Druckstücken (13) gehalten sind,
i. wobei der Käfig (6a, 6b, 6c, 6d) zwischen dem Innenring (2) und dem Außenring (3) in radialer Richtung zur Durchgangsbohrung (5a, 5b) angeordnet ist und
ii. von dem Innenring (2) und dem Außenring (3) vollständig umschlossen ist, wobei die Druckfedern (12) im Käfig (6a, 6b, 6c, 6d) durch Verdrehen des Käfigs (6a, 6b, 6c, 6d) gegenüber dem Innenring (2) und anschließenden formschlüssiges Fixieren des Käfigs (6a, 6b, 6c, 6d) am Innenring (2) durch geeignete Mittel (11, 17a, 17b, 27a, 27b, 36, 37) vorgespannt sind.

2. Nachstelleinrichtung (100) nach Anspruch 1, **dadurch gekennzeichnet, dass** die geeigneten Mittel zur Vorspannung des Innenrings (2) ein Pin (37, 17a, 17b) und eine Bohrung (11) sind.

3. Nachstelleinrichtung (100) nach Anspruch 1, **dadurch gekennzeichnet, dass** die geeigneten Mittel zur Vorspannung des Innenrings (2) Enden von Schnapphaken Pin (27a, 27b) und eine Gegenkontur (36) sind.

4. Nachstelleinrichtung (100) nach einem der vorgenannten Ansprüche, **dadurch gekennzeichnet, dass** der Innenring (2) des Freilaufs (1) einen Absatz (8) aufweist, auf dessen Umfang mehrere Klemmkeile (9) in einer regelmäßigen Winkelteilung angeordnet sind.

5. Nachstelleinrichtung (100) nach Anspruch 4, **dadurch gekennzeichnet, dass** die Klemmrollen (7) im montierten Zustand des Freilaufs (1) in den Klemmkeilen (9) angeordnet sind.

6. Nachstelleinrichtung (100) nach Anspruch 5, **dadurch gekennzeichnet, dass** die Klemmkeile (9) einen Klemmwinkel zwischen 2,6° und 4,2° aufweisen.

7. Nachstelleinrichtung (100) nach einem der vorgenannten Ansprüche, **dadurch gekennzeichnet, dass** der Innenring (2) und der Außenring (3) vorzugsweise jeweils durch ein Umformverfahren oder ein Urformverfahren hergestellt sind, das eine Umformung bzw. eine Urformung auf eine Nettogeometrie mit ausreichenden Toleranzen erlaubt.

8. Nachstelleinrichtung (100) nach Anspruch 7, **dadurch gekennzeichnet, dass** der Innenring (2) und der Außenring (3) jeweils durch ein Kaltfließpressverfahren hergestellt sind.

9. Nachstelleinrichtung (100) nach Anspruch 7 oder 8, **dadurch gekennzeichnet, dass** der Innenring (2) und der Außenring (3) jeweils vorzugsweise aus Stahl hergestellt sind.

10. Nachstelleinrichtung (100) nach einem der Ansprüche 1 bis 7, **dadurch gekennzeichnet, dass** der Innenring (2) und der Außenring (3) jeweils durch ein pulvermetallurgisches Sinterverfahren hergestellt sind.

11. Nachstelleinrichtung (100) nach Anspruch 10, **dadurch gekennzeichnet, dass** der Innenring (2) und der Außenring (3) jeweils vorzugsweise aus einem Pulvermetall, vorzugsweise aus Sinterstahl hergestellt sind.

12. Nachstelleinrichtung (100) nach einem der vorgenannten Ansprüche, **dadurch gekennzeichnet, dass** der Käfig (6a, 6d) einstückig ausgebildet ist.

13. Nachstelleinrichtung (100) nach einem der Ansprüche 1 bis 11, **dadurch gekennzeichnet, dass** der Käfig (6b, 6c) als Kette aus mehreren Käfiggliedern (14a, 14 b) hergestellt ist.

14. Nachstelleinrichtung (100) nach Anspruch 13, **dadurch gekennzeichnet, dass** die Käfigglieder (14a, 14b) jeweils zwei Laschen (15a, 15b) aufweisen.

15. Nachstelleinrichtung (100) nach Anspruch 14, **dadurch gekennzeichnet, dass** die Laschen (15a, 15b) jeweils eine Öse (16a, bzw. 16b) aufweisen.

16. Nachstelleinrichtung (100) nach Anspruch 15, **dadurch gekennzeichnet, dass** die jeweils eine Öse (16b) über jeweils ein Filmscharnier (19) an das Käfigglied (14b) angesetzt ist.

17. Nachstelleinrichtung (100) nach einem der Ansprüche 13 bis 16, **dadurch gekennzeichnet, dass** die Käfigglieder (14a, 14 b) jeweils mindestens einen Pin (17a, 17b) aufweisen.

18. Nachstelleinrichtung (100) nach einem der Ansprüche 13 bis 17, **dadurch gekennzeichnet, dass** die Käfigglieder (14a, 14 b) dadurch miteinander zu dem Käfig (6b, 6c) verbunden sind, in dem jeweils die Öse (16a, bzw. 16b) auf jeweils einen Pin (17a, 17b) eingehängt ist.

19. Nachstelleinrichtung (100) nach einem der Ansprüche 13 bis 18, **dadurch gekennzeichnet, dass** die Käfigglieder (14a, 14b) des Käfigs (6b, 6c) vorzugsweise aus einem Kunststoffwerkstoff in einem Spritzgießverfahren hergestellt sind.

20. Nachstelleinrichtung (100) nach einem der Ansprüche 1 bis 11, **dadurch gekennzeichnet, dass** der Käfig (6d) mehrere Laschenabschnitte (22) aufweist, wobei die Laschenabschnitte (22) in einer regelmäßigen Winkelteilung auf dem Umfang des Käfigs (6d) verteilt sind.

21. Nachstelleinrichtung (100) nach Anspruch 20, **dadurch gekennzeichnet, dass** jeder Laschenabschnitt (22) ein Langloch (23a) aufweist, wobei das Langloch (23a) im montierten Zustand des Käfigs (6d) von einem Führungsansatz (18) des Druckstücks (13) durchgriffen ist.

22. Nachstelleinrichtung (100) nach Anspruch 20 oder 21, **dadurch gekennzeichnet, dass** der jeweilige Laschenabschnitt (22) jeweils von einem Riegelabschnitt (24) begrenzt ist, so dass die Riegelabschnitte (24) in einer regelmäßigen Winkelteilung auf dem Umfang des Käfigs (6d) verteilt sind.

23. Nachstelleinrichtung (100) nach Anspruch 22, **dadurch gekennzeichnet, dass** der Riegelabschnitt (24) einen Verbindungssteg (25) aufweist, über den der Riegelabschnitt (24) jeweils mit dem Laschenabschnitt (22) einstückig verbunden ist.

24. Nachstelleinrichtung (100) nach Anspruch 22 oder 23, **dadurch gekennzeichnet, dass** der Riegelabschnitt (24) einen Schnapphakenabschnitt (26) aufweist, der zwei symmetrisch gegenüberliegende Schnapphaken (27a, 27b) ausformt, wobei die Schnapphaken (27a, 27b) des Schnapphakenabschnitts (26) im unmontierten Zustand des Käfigs (6d) in Richtung Mittelpunkt des kreisförmigen Käfigs (6d) weisen.

25. Nachstelleinrichtung (100) nach Anspruch 24, **dadurch gekennzeichnet, dass** der Verbindungssteg (25) und der Schnapphakenabschnitt (26) jeweils durch ein Filmscharnier (28) verbunden sind.

26. Nachstelleinrichtung (100) nach einem der Ansprüche 23 bis 25, **dadurch gekennzeichnet, dass** sich an den Verbindungssteg (25) jeweils ein Gegenabschnitt (29) anschließt, der ebenfalls mit einem Filmscharnier (30) mit dem Verbindungsabschnitt (25) verbunden ist, wobei der Gegenabschnitt (29) im unmontierten Zustand des Käfigs (6d) vom Mittelpunkt des kreisförmigen Käfigs (6d) weg weist.

27. Nachstelleinrichtung (100) nach Anspruch 26, **dadurch gekennzeichnet, dass** sich an dem Gegenabschnitt (29) jeweils zwei Teillaschenabschnitte (31a, 31 b) anschließen, die über ein Filmscharnier (32) mit dem Gegenabschnitt (29) verbunden sind.

28. Nachstelleinrichtung (100) nach Anspruch 27, **dadurch gekennzeichnet, dass** die beiden Teillaschenabschnitte (31a, 31b) eine Nut (33) aufweisen, in die im montierten Zustand des Käfigs (6d) die beiden Schnapphaken (27a, 27 b) eingerastet sind.

29. Nachstelleinrichtung (100) nach Anspruch 27 oder 28, **dadurch gekennzeichnet, dass** die beiden Teillaschenabschnitte (31a, 31b) jeweils einen Einschnitt (34a, 34b) aufweisen, die im montierten Zustand des Käfigs (6d) ein Langloch (23b) bilden.

30. Nachstelleinrichtung (100) nach einem der Ansprüche 26 bis 29, **dadurch gekennzeichnet, dass** der Schnapphakenabschnitt (26) und der Gegenabschnitt (29) jeweils einen Absatz (35) aufweisen, auf dem sich im montierten Zustand des Käfigs (6d) die Druckfeder (12) abstützt.

31. Nachstelleinrichtung (100) nach einem der Ansprüche 1 bis 11, **dadurch gekennzeichnet, dass** der Käfig (6d) vorzugsweise aus einem Kunststoffwerkstoff in einem Spritzgießverfahren hergestellt ist und als flaches Bauteil dem Spritzgießwerkzeug entnommen wird.

32. Scheibenbremse (120), insbesondere für Nutzfahrzeuge, mit einer Nachstelleinrichtung (100) nach einem der vorgenannten Ansprüche.

## Claims

1. Adjusting device (100) for a disc brake (120), in particular for commercial vehicles, comprising a freewheel (1),
a. wherein the freewheel (1) has an inner ring (2) and an outer ring (3), and
b. the freewheel (1) furthermore has a through bore (5a, 5b) which passes in each case through the inner ring (2) and the outer ring (3),
**characterised in that**
the inner ring (2) and the outer ring (3) together with a plurality of rolling bearing balls (4) form an axial ball bearing, and the inner ring (2) being mounted rotatably in relation to the outer ring (3) by said plurality of rolling bearing balls, and
c. the freewheel (1) furthermore has a cage (6a, 6b, 6c, 6d) in which a plurality of clamping rollers (7) are held with compression springs (12) and pressure pieces (13),
i. wherein the cage (6a, 6b, 6c, 6d) is arranged between the inner ring (2) and the outer ring (3) in a radial direction with respect to the through bore (5a, 5b), and
ii. is completely surrounded by the inner ring (2) and the outer ring (3), wherein compression springs (12) are preloaded in the cage (6a, 6b, 6c, 6d) by rotation of the cage (6a, 6b, 6c, 6d) in relation to the inner ring (2) and subsequent positive fixing of the cage (6a, 6b, 6c, 6d) on the inner ring (2) by suitable means (11, 17a, 17b, 27a, 27b, 36, 37).

2. Adjusting device (100) according to claim 1, **characterised in that** the suitable means for preloading the inner ring (2) are a pin (37, 17a, 17b) and a bore (11).

3. Adjusting device (100) according to claim 1, **characterised in that** the suitable means for preloading the inner ring (2) are ends of snap hook pins (27a, 27b) and a mating contour (36).

4. Adjusting device (100) according to any of the preceding claims, **characterised in that** the inner ring (2) of the freewheel (1) has a step (8), on the circumference of which a plurality of clamping wedges (9) are arranged at a regular angular pitch.

5. Adjusting device (100) according to claim 4, **characterised in that** the clamping rollers (7) are arranged in the clamping wedges (9) in the mounted state of the freewheel (1).

6. Adjusting device (100) according to claim 5, **characterised in that** the clamping wedges (9) have a clamping angle of between 2.6° and 4.2°.

7. Adjusting device (100) according to any of the preceding claims, **characterised in that** the inner ring (2) and the outer ring (3) are preferably each produced by a deformation method or a primary forming method which permits deformation or primary forming to a net geometry with sufficient tolerances.

8. Adjusting device (100) according to claim 7, **characterised in that** the inner ring (2) and the outer ring (3) are each produced by a cold extrusion method.

9. Adjusting device (100) according to claim 7 or 8, **characterised in that** the inner ring (2) and the outer ring (3) are each preferably produced from steel.

10. Adjusting device (100) according to any of claims 1 to 7, **characterised in that** the inner ring (2) and the outer ring (3) are each produced by a powder-metallurgical sintering method.

11. Adjusting device (100) according to claim 10, **characterised in that** the inner ring (2) and the outer ring (3) are each preferably produced from a powder metal, preferably from sintered steel.

12. Adjusting device (100) according to any of the preceding claims, **characterised in that** the cage (6a, 6d) is of integral design.

13. Adjusting device (100) according to any of claims 1 to 11, **characterised in that** the cage (6b, 6c) is produced as a chain of a plurality of cage links (14a, 14b).

14. Adjusting device (100) according to claim 13, **characterised in that** the cage links (14a, 14b) have two plates (15a, 15b) each.

15. Adjusting device (100) according to claim 14, **characterised in that** the plates (15a, 15b) have an eye (16a and 16b) each.

16. Adjusting device (100) according to claim 15, **characterised in that** the eye (16b) in each case is fitted onto the cage link (14b) via a film hinge (19).

17. Adjusting device (100) according to any of claims 13 to 16, **characterised in that** the cage links (14a, 14b) each have at least one pin (17a, 17b).

18. Adjusting device (100) according to any of claims 13 to 17, **characterised in that** the cage links (14a, 14b) are connected to one another to form the cage (6b, 6c) by the eye (16a or 16b) in each case being suspended on a respective pin (17a, 17b).

19. Adjusting device (100) according to any of claims 13 to 18, **characterised in that** the cage links (14a, 14b) of the cage (6b, 6c) are preferably produced from a plastics material in an injection moulding process.

20. Adjusting device (100) according to any of claims 1 to 11, **characterised in that** the cage (6b) has a plurality of plate portions (22), wherein the plate portions (22) are distributed over the circumference of the cage (6d) at a regular angular pitch.

21. Adjusting device (100) according to claim 20, **characterised in that** each plate portion (22) has a slot (23a), wherein the slot (23a) is passed through in the mounted state of the cage (6d) by a guide lug (18) of the pressure piece (13).

22. Adjusting device (100) according to claim 20 or 21, **characterised in that** the respective plate portion (22) is in each case bounded by a locking portion (24) such that the locking portions (24) are distributed over the circumference of the cage (6d) at a regular angular pitch.

23. Adjusting device (100) according to claim 22, **characterised in that** the locking portion (24) has a connecting web (25) via which the locking portion (24) is in each case joined integrally to the plate portion (22).

24. Adjusting device (100) according to claim 22 or 23, **characterised in that** the locking portion (24) locking portion (24) has a snap hook portion (26) which forms two symmetrically opposite snap hooks (27a, 27b), wherein the snap hooks (27a, 27b) of the snap hook portion (26) face in the direction of the centre point of the circular cage (6d) when the cage (6d) is not mounted.

25. Adjusting device (100) according to claim 24, **characterised in that** the connecting web (25) and the snap hook portion (26) are in each case connected by a film hinge (28).

26. Adjusting device (100) according to any of claims 23 to 25, **characterised in that** a mating portion (29) in each case adjoins the connecting web (25), said mating portion likewise being connected by a film hinge (30) to the connecting portion (25), wherein the mating portion (29) faces away from the centre point of the circular cage (6d) when the cage (6d) is not mounted.

27. Adjusting device (100) according to claim 26, **characterised in that** the mating portion (29) is adjoined by in each case two partial plate portions (31a, 31b) which are connected to the mating portion (29) via a film hinge (32).

28. Adjusting device (100) according to claim 27, **characterised in that** the two partial plate portions (31a, 31b) have a groove (33) in which the two snap hooks (27a, 27b) are latched in the mounted state of the cage (6d).

29. Adjusting device (100) according to claim 27 or 28, **characterised in that** the two partial plate portions (31a, 31b) each have an incision (34a, 34b), said incisions forming a slot (23b) in the mounted state of the cage (6d).

30. Adjusting device (100) according to any of claims 26 to 29, **characterised in that** the snap hook portion (26) and the mating portion (29) each have a step (35) on which the compression spring (12) is supported in the mounted state of the cage (6d).

31. Adjusting device (100) according to any of claims 1 to 11, **characterised in that** the cage (6d) is preferably produced from a plastics material in an injection moulding process and is removed as a flat component from the injection mould.

32. Disc brake (120), in particular for commercial vehicles, comprising an adjusting device (100) according to any of the preceding claims.

## Revendications

1. Dispositif (100) de rattrapage d'un frein (120) à disque, notamment de véhicules utilitaires, comprenant une roue libre (1),
a. dans lequel la roue libre (1) a une bague (2) intérieure ainsi qu'une bague (3) extérieure et
b. la roue libre (1) a, en outre, un alésage (5a, 5b) de passage, qui traverse la bague (2) intérieure et la bague (3) extérieure,
**caractérisé en ce que**
la bague (2) intérieure et la bague (3) extérieure forment ensemble avec plusieurs billes (4) de roulement un palier à billes axial, par lequel la bague (2) intérieure est montée tournante par rapport à la bague (3) extérieure et
c. la roue libre (1) a, en outre, une cage (6a, 6b, 6c, 6d), dans laquelle plusieurs rouleaux (7) entraîneurs sont retenus par des ressorts (12) de compression et des pièces (13) de pression,
i. dans lequel la case (6a, 6b, 6c, 6c) est disposée entre la bague (2) intérieure et la bague (3) extérieure dans la direction radiale à l'alésage (5a, 5b) de passage et
ii. est entourée complètement de la bague (2) intérieure et de la bague (3) extérieure,
dans lequel les ressorts (12) de compression sont précontraints par des moyens (11, 17a, 17b, 27a, 27b, 36, 37) appropriés dans la cage (6a, 6b, 6c, 6d) par torsion de la cage (6a, 6b, 6c, 6d) par rapport à la bague (2) intérieure et immobilisation ensuite à complémentarité de forme de la cage (6a, 6b, 6c, 6d) sur la bague (2) intérieure.

2. Dispositif (100) de rattrapage suivant la revendication 1, **caractérisé en ce que** les moyens appropriés de précontrainte de la bague (2) intérieure sont une goupille (37, 17a, 17b) et un trou (11).

3. Dispositif (100) de rattrapage suivant la revendication 1, **caractérisé en ce que** les moyens appropriés de précontrainte de la bague (2) intérieure sont des extrémités de goupille (27a, 27b) de crochet-mousqueton et un contour (36) antagoniste.

4. Dispositif (100) de rattrapage suivant l'une des revendications précédentes, **caractérisé en ce que** la bague (2) intérieure de la roue libre (1) a un ressaut (8) sur le pourtour duquel sont disposés plusieurs coins (9) de serrage suivant une répartition angulaire régulière.

5. Dispositif (100) de rattrapage suivant la revendication 4, **caractérisé en ce que** les rouleaux (7) entraîneurs sont, à l'état monté de la roue libre (1), disposés dans les coins (9) de serrage.

6. Dispositif (100) de rattrapage suivant la revendication 5, **caractérisé en ce que** les coins (9) de serrage ont un angle de serrage compris entre 2,6° et 4,2°.

7. Dispositif (100) de rattrapage suivant l'une des revendications précédentes, **caractérisé en ce que** la bague (2) intérieure et la bague (3) extérieure sont fabriquées de préférence, respectivement, par un procédé de déformation ou par un procédé de transformation, qui permet une déformation ou une transformation à une géométrie nette ayant des tolérances suffisantes.

8. Dispositif (100) de rattrapage suivant la revendication 7, **caractérisé en ce que** la bague (2) intérieure et la bague (3) extérieure sont fabriquées chacune par un procédé à la presse de filage à froid.

9. Dispositif (100) de rattrapage suivant la revendication 7 ou 8, **caractérisé en ce que** la bague (2) intérieure et la bague (3) extérieure sont chacune de préférence en acier.

10. Dispositif (100) de rattrapage suivant l'une des revendications 1 à 7, **caractérisé en ce que** la bague (2) intérieure et la bague (3) extérieure sont fabriquées chacune par un procédé de frittage en métallurgie des poudres.

11. Dispositif (100) de rattrapage suivant la revendication 10, **caractérisé en ce que** la bague (2) intérieure et la bague (3) extérieure sont, respectivement, de préférence en un métal en poudre, de préférence en acier fritté.

12. Dispositif (100) de rattrapage suivant l'une des revendications précédentes, **caractérisé en ce que** la cage (6a, 6d) est d'une seule pièce.

13. Dispositif (100) de rattrapage suivant l'une des revendications 1 à 11, **caractérisé en ce que** la cage (6b, 6c) est fabriquée sous la forme d'une chaîne en plusieurs maillons (14a, 14b).

14. Dispositif (100) de rattrapage suivant la revendication 13, **caractérisé en ce que** les maillons (14a, 14b) de la cage ont chacun deux languettes (15a, 15b).

15. Dispositif (100) de rattrapage suivant la revendication 14, **caractérisé en ce que** les languettes (15a, 15b) ont chacune un œillet (16a ou 16b).

16. Dispositif (100) de rattrapage suivant la revendication 15, **caractérisé en ce que** le, respectivement, un œillet (16b) est mis sur le maillon (14b) de la cage par, respectivement, une charnière (19) souple.

17. Dispositif (100) de rattrapage suivant l'une des revendications 13 à 16, **caractérisé en ce que** les maillons (14a, 14b) de la cage ont chacun au moins une goupille (17a, 17b).

18. Dispositif (100) de rattrapage suivant l'une des revendications 13 à 17, **caractérisé en ce que** les maillons (14a, 14b) de la cage sont assemblés entre eux en la cage (6b, 6c) par le fait que, respectivement, l'œillet (16a ou 16b) est accroché à une goupille (17a, 17b) respective.

19. Dispositif (100) de rattrapage suivant l'une des revendications 13 à 18, **caractérisé en ce que** les maillons (14a, 14b) de la cage (6b, 6c) sont fabriqués de préférence en une matière plastique suivant un procédé de moulage par injection.

20. Dispositif (100) de rattrapage suivant l'une des revendications 1 à 11, **caractérisé en ce que** la cage a plusieurs parties (22) de languette, les parties (22) de languette étant réparties suivant un pas angulaire régulier sur le pourtour de la cage (6b).

21. Dispositif (100) de rattrapage suivant la revendication 20, **caractérisé en ce que** chaque partie (22) de languette a une boutonnière (23a), la boutonnière (23a) étant, à l'état monté de la cage (6b), traversée par un embout (18) de guidage de la pièce (13) de pression.

22. Dispositif (100) de rattrapage suivant la revendication 20 ou 21, **caractérisé en ce que** la partie (22) de languette est délimitée par une partie (24) de verrou, de manière à ce que les parties (24) de verrou soient réparties suivant une répartition angulaire régulière sur le pourtour de la cage (6d).

23. Dispositif (100) de rattrapage suivant la revendication 22, **caractérisé en ce que** la partie (24) de verrou a une entretoise (25) de liaison, par laquelle la partie (24) de verrou est reliée d'une seule pièce, respectivement, avec la partie (22) de languette.

24. Dispositif (100) de rattrapage suivant la revendication 22 ou 23, **caractérisé en ce que** la partie (24) de verrou a une partie (26) de crochet-mousqueton, qui est formée de deux crochet-mousquetons (27a, 27b) opposés symétriquement, les crochet-mousqueton (27a, 27b) de la partie (26) de crochet-mousqueton étant, lorsque la cage (6d) est à l'état non monté, tournés vers le centre de la cage (6d) circulaire.

25. Dispositif (100) de rattrapage suivant la revendication 24, **caractérisé en ce que** l'entretoise (25) de liaison et la partie (26) de crochet-mousqueton sont reliées, respectivement, par une charnière (28) souple.

26. Dispositif (100) de rattrapage suivant l'une des revendications 23 à 25, caractérisé à ce qu'à l'entretoise (25) de liaison se raccorde, respectivement, une contre-partie (29), qui est reliée également par une charnière (30) souple à la partie (25) de liaison, la contre-partie (29) s'éloignant, lorsque la cage (6d) est à l'état non monté, du centre de la cage (6d) circulaire.

27. Dispositif (100) de rattrapage suivant la revendication 26, **caractérisé en ce qu'**à la contre-partie (29) sont reliées, respectivement, deux parties (31a, 31b) de languette partielles, qui sont reliées à la contre-partie (29) par une charnière (32) souple.

28. Dispositif (100) de rattrapage suivant la revendication 27, **caractérisé en ce que** les deux parties (31a, 3b) de languette partielles ont une rainure (33), dans laquelle, lorsque la cage (6d) est à l'état monté, les deux crochet-mousquetons (27a, 27b) sont encliquetés.

29. Dispositif (100) de rattrapage suivant la revendication 27 ou 28, **caractérisé en ce que** les deux parties (31a, 31b) de languette partielles ont chacune une entaille (34a, 34b), qui forment, lorsque la cage (6d) est à l'état monté, une boutonnière (23b).

30. Dispositif (100) de rattrapage suivant l'une des revendications 26 à 29, **caractérisé en ce que** la partie (26) de crochet-mousqueton et la contre-partie (29) ont chacune un ressaut (35), sur lequel, lorsque la cage (6d) est à l'état monté, le ressort (12) de compression s'appuie.

31. Dispositif (100) de rattrapage suivant l'une des revendications 1 à 11, **caractérisé en ce que** la cage (6d) est fabriquée de préférence en une matière plastique suivant un procédé de moulage par injection et est démoulée de l'outil de moulage par injection sous la forme d'une pièce plate.

32. Frein (120) à disque, notamment de véhicule utilitaire, ayant un dispositif (100) de rattrapage suivant l'une des revendications précédentes.
